Europäisches Patentamt

European Patent Office

Office européen des brevets

(11) Veröffentlichungsnummer: **0 165 385**
**A2**

## (12) EUROPÄISCHE PATENTANMELDUNG

(21) Anmeldenummer: 85103587.3

(22) Anmeldetag: 26.03.85

(51) Int. Cl.⁴: **G 01 B 11/00**

(30) Priorität: 21.04.84 DE 3415043

(43) Veröffentlichungstag der Anmeldung:
27.12.85 Patentblatt 85/52

(84) Benannte Vertragsstaaten:
DE FR GB IT SE

(71) Anmelder: ELTRO GmbH Gesellschaft für
Strahlungstechnik
Kurpfalzring 106 Postfach 10 21.20
D-6900 Heidelberg 1(DE)

(72) Erfinder: Ruger, James, Dr.
Silbergasse 33
D-6921 Hoffenheim(DE)

(72) Erfinder: Strauss, Manfred
Klingenhüttenweg 7a
D-6900 Heidelberg(DE)

(72) Erfinder: Welz, Wolfgang
Ringstrasse 73
D-6901 Bammental(DE)

(74) Vertreter: Muschka, Wilhelm, Dipl.-Ing.
Eltro GmbH Gesellschaft für Strahlungstechnik
Kurpfalzring 106 Postfach 10 21 20
D-6900 Heidelberg 1(DE)

(54) Verfahren und Schaltungsanordnung zum entfernungs- und winkelunabhängigen Messen gleicher Abstandspunkte von einem gemeinsamen Bezugspunkt aus.

(57) Verfahren und Schaltungsanordnung zum entfernungs- und winkelunabhängigen Messen gleicher Abstandspunkte von einem gemeinsamen Bezugspunkt aus. Hierzu bedient man sich eines die interessierende Objektfläche abtastenden Schwingsystems, dessen Abtastfunktion u in eine proportionale Wechselspannung umgewandelt und in Relation zu einer in einzelne Schritte unterteilten Referenzspannung $u_{Ref}$ gesetzt wird. Ein Über- oder Unterschreiten der Referenzspannung durch die Wechselspannung erzeugt ein Triggersignal, das die Referenzspannungsschritte weiterschaltet und gleichzeitig Meßvorgänge in voneinander äquidistanten Abschnitten $\Delta y$ auslöst.

Fig. 2

**0165385**

Ma/Kr/558

<u>Beschreibung</u>

Verfahren und Schaltungsanordnung zum entfernungs-
und winkelunabhängigen Messen gleicher Abstandspunkte
von einem gemeinsamen Bezugspunkt aus

---

Die Erfindung bezieht sich auf ein Verfahren zum entfernungs- und
winkelunabhängigen Messen gleicher Abstandspunkte von einem gemeinsamen Bezugspunkt aus gemäß dem Oberbegriff des Anspruchs 1 sowie
auf eine Schaltungsanordnung zur Durchführung dieses Verfahrens.

Die Aufgabe der Erfindung wird in der Schaffung einer Möglichkeit gesehen eine Meßfläche entfernungs- und abtastwinkelunabhängige in
äquidistanten Abständen anzumessen. Diese Aufgabe wird erfindungsgemäß durch die im Kennzeichen des Anspruchs 1 genannten Merkmale gelöst. Dadurch wird es in vergleichsweise einfacher Weise möglich,
eine z.B. hinsichtlich ihrer Rauhigkeit bzw. ihres Profils oder auch
ihrer Temperatur interessierende Oberfläche in monotonen Abständen
anzumessen.

Vorteilhafte Weiterbildungen der Erfindung sind Gegenstand der Unteransprüche.

Im folgenden wird an Hand einer Zeichnung ein Ausführungsbeispiel der
Erfindung erläutert, wobei die in den einzelnen Figuren einander entsprechenden Teile dieselben Bezugszahlen aufweisen. Es zeigt

Fig. 1 eine Prinzipskizze des Meßvorgangs,

Fig. 2 eine sinusförmige Kurve u des abtastenden
Schwingsystems mit den einzelnen Schritten der
für den Meßvorgang benötigten Referenzspannung $u_{Ref}$,

Fig. 3 ein vereinfachtes Blockschaltbild des erfindungsgemäßen Meßvorgangs und

Fig. 4 das Blockschaltbild gemäß Fig. 3, jedoch in
ausführlicher Darstellungsweise.

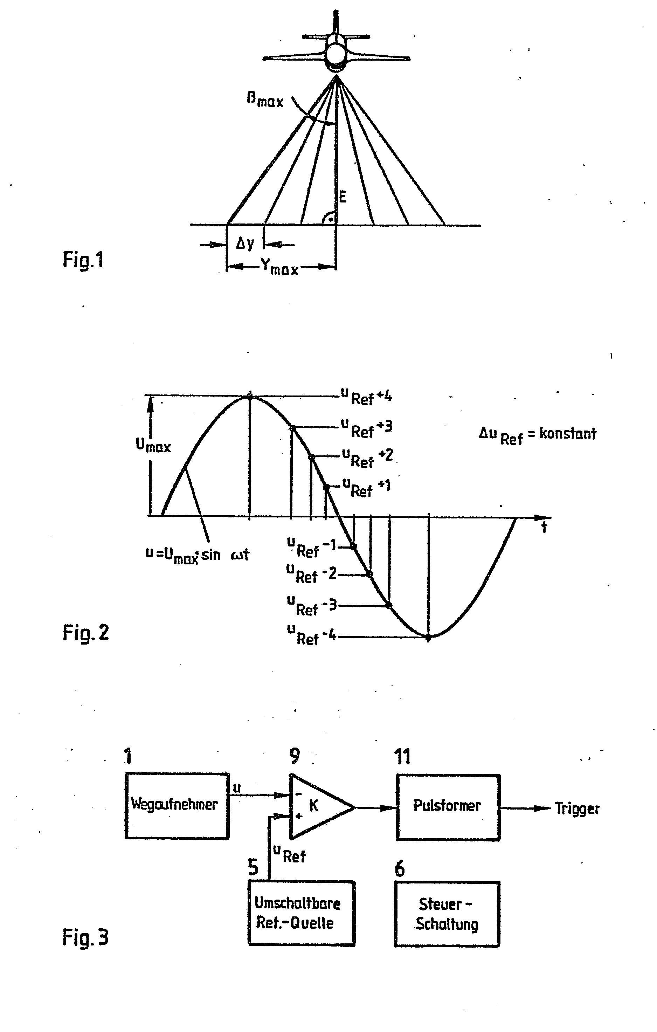

Das Schwingsystem, z.B. ein Spiegel oder Prisma, soll in dem angenommenen Ausführungsbeispiel einfachheitshalber sinusförmig schwingen, wie dies in Fig. 2 angedeutet ist. Dieselben Überlegungen gelten jedoch auch für Dreieck-, Sägezahn- oder jede andere Schwingungsform, sofern sie nur monoton bzw. gleichförmig verläuft.

Wie in Fig. 1 dargestellt, läßt sich die augenblickliche Auslenkung des Schwingungssystems auf einer Meßfläche errechnen aus:

$$y = y_{max} \cdot \sin \omega t \dots\dots\dots\dots \qquad \text{I.}$$

Den momentanen Wechselspannungswert u, den der Wegaufnehmer abgibt erhält man aus

$$u = U_{max} \cdot \sin \omega t \dots\dots\dots\dots \qquad \text{II.}$$

Durch Verknüpfung beider Gleichungen mit der geometrischen Beziehung

$$y_{max} = E \cdot \tan \beta_{max} \dots\dots\dots\dots \qquad \text{III.}$$

wobei E die kürzeste Entfernung zwischen Schwingsystemen und Meßfläche sowie $\beta_{max}$ den halben maximalen Abtastwinkel bedeuten, erhält man die für alle vorstehend erwähnten Kurvenformen zutreffende Gleichung

$$u = \frac{U_{max} \cdot y}{E \cdot \tan \beta_{max}} \dots\dots\dots\dots \qquad \text{IV.}$$

Aus den wenigen Beziehungen erkennt man, daß sich bei konstantem Winkel $\beta_{max}$ und gleichbleibender Entfernung E die momentane Wechselspannung u proportional der Strecke y ändert. Mit anderen Worten, es vervielfacht sich die Strecke y solange, bis die Strecke $y_{max}$ erreicht ist; dann hat sich auch die zu diesem Zeitpunkt gemessene Wechselspannung u verdoppelt, verdreifacht usw.

Diese Erkenntnis wird nun in erfindungsgemäßer Weise dazu verwendet, eine Triggerimpulsfolge zu erzeugen, die es unabhängig von der Abtastfunktion ermöglicht, in äquidistanten Abständen Messungen auf einer Meßfläche vorzunehmen. Dies gilt sowohl für bewegte als auch statische Meßflächen. Ebenso kann sich der Ort, von dem aus gemessen wird, in Bewegung befinden oder aber statisch festliegen. In der Praxis bedeutet dies, daß man dieserart Messungen von einem Fahrzeug, Flugkörper oder Schiff ebenso wie von einem Mikroskop aus an einem gleichfalls bewegten oder festen Meßobjekt durchführen kann.

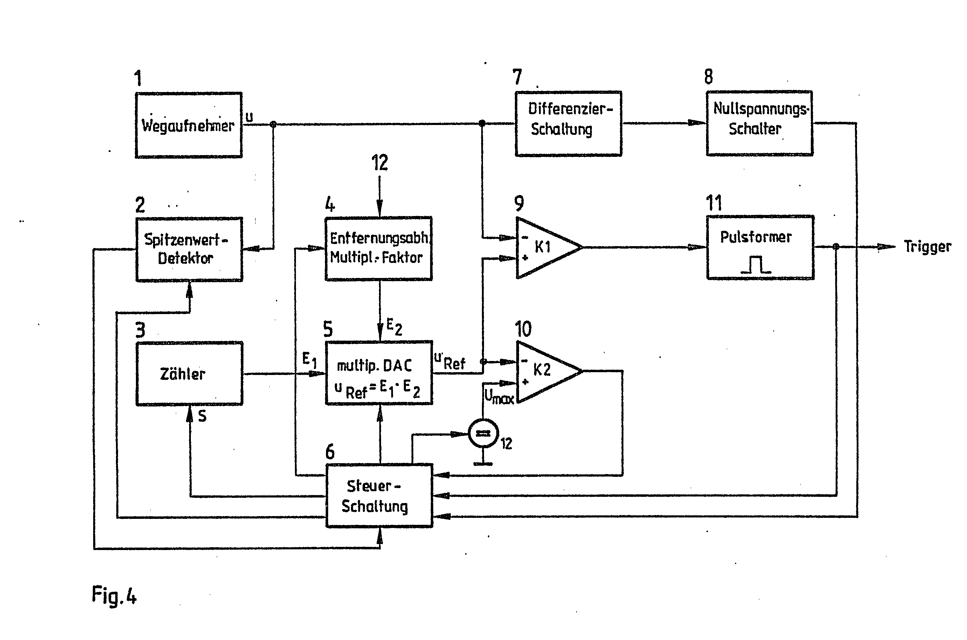

Die Messung der in Fig. 4 mit Pfeil 12 symbolisierten Entfernung zum Meßobjekt kann automatisch / oder manuell erfolgen. In ersterem Fall ist es beispielsweise denkbar, insbesondere wenn schnelle Bewegungsabläufe zu berücksichtigen sind, daß die Entfernung mit einem nach dem Impulslaufzeitprinzip arbeitenden Laserentfernungsmesser ermittelt wird; dabei verläuft sowohl die vom Lasersender in Richtung Meßobjekt ausgesandte als auch die vom Meßobjekt reflektierte und vom Laserempfänger aufgenommene Strahlung über die Abtastfläche des Schwingungssystems. Bei der manuellen Methode dagegen kann jedes herkömmliche Längenmeßsystem verwendet werden. Die dabei ermittelte Entfernung kann entweder automatisch oder von Hand übergeben werden.

Das Zustandekommen der Triggerimpulsfolge geht aus Fig. 3 hervor: Die Wechselspannung u des Wegaufnehmers 1 wird auf den invertierenden Eingang des Komparators 9 gelegt, während an den nichtinvertierenden Eingang die einzelnen "Spannungsschritte" erzeugende Referenzspannungsquelle 5 angeschlossen ist. Die Anzahl der Schritte, die diese Referenzspannungsquelle erzeugt, ergibt sich durch die Verdoppelung des Quotienten $\frac{y_{max}}{\Delta y}$, wobei $\Delta y$ geometrisch der Länge der einzelnen äquidistanten Abstände (Fig. 1) und elektrisch den Referenzspannungswerten $\Delta u_{Ref}$ entspricht.

Über- oder unterschreitet der Wechselspannungswert u den Referenzspannungswert $u_{Ref}$ am Eingang des Komparators 9, dann zeigt sein Ausgang einen Zustandswechsel an, welcher in der sich anschließenden Pulsformerstufe 11 zu dem für die Messung benötigten Triggersignal umgewandelt wird. Vom Triggersignal aus wird auch die Referenzspannungsquelle 5 angestoßen, die sodann auf den nächsten Referenzspannungswert $u_{Ref}$ umschaltet. Dies wird solange durchgeführt,bis sämtliche z.B. in Fig. 2 zwischen Amplitudenmaximum und -minimum eingezeichneten Schritte durchlaufen sind.

Ein weiteres, aus Fig. 4 ersichtliches Ausführungsbeispiel berücksichtigt zusätzlich die Abhängigkeit der Abstände $\Delta y$(Fig. 1) auf der Meßfläche von Entfernung E und Abtastwinkel $\beta_{max}$. Ändert sich in der auf die Schrittverhältnisse abgestimmten Gleichung IV

$$\Delta u_{Ref} = \frac{U_{max} \cdot \Delta y}{E \cdot \tan \beta_{max}} \quad \ldots\ldots\ldots\ldots \quad V.$$

die Entfernung E, so muß nur die Referenzspannung $\Delta u_{Ref}$ mit einem Korrekturfaktor multipliziert werden, um wieder Proportionalität zwischen den Abständen $\Delta y$ und den Referenzspannungswerten $\Delta u_{Ref}$ zu erzielen. Modifiziert man Gleichung V geringfügig, so erhält man:

$$E_{Ref} \pm \Delta E = \frac{U_{max} \cdot y}{\Delta u_{Ref} \cdot \left( \frac{E_{Ref}}{E_{Ref} \pm \Delta E} \right) \cdot \tan \beta_{max}} \quad \ldots\ldots \quad VI.$$

Hieraus ergibt sich der erwähnte Korrekturfaktor, mit dem der Referenzspannungswert $\Delta u_{Ref}$ multipliziert werden muß, zu

$$E_k = \frac{E_{Ref}}{E_{Ref} \pm \Delta E} \quad \ldots\ldots\ldots\ldots \quad VII$$

Der Gleichung IV ist sodann auch zu entnehmen, daß sich bei veränderlichem Abtastwinkel $\beta_{max}$ der Spitzenspannungswert $U_{max}$ entsprechend dem Verhältnis

$$W_k = \frac{\tan(\beta_{maxRef} \pm \beta)}{\tan \beta_{max\,Ref}} \quad \cdots\cdots\cdots \quad VIII$$

ändert, so daß sich an der Proportionalität zwischen Referenzspannungswert $\Delta u_{Ref}$ und Abstand $\Delta y$ nichts ändert. Hingegen bewirkt der veränderte Winkel eine Änderung in der Anzahl der äquidistanten Abstände bzw. derjenigen Schritte, in denen die umschaltbare Referenzquelle 6 umgeschaltet werden muß. ... Die Anzahl der Referenzspannungsschritte läßt sich aus dem verdoppelten Quotienten

$$S = \frac{U_{max}}{\Delta u_{Ref}} \quad \cdots\cdots\cdots \quad IX$$

ermitteln, der wiederum identisch ist mit dem verdoppelten Quotienten $\frac{y_{max}}{\Delta y}$.

Diese den Gleichungen V bis IX zugrunde liegenden Bedingungen werden durch das Ausführungsbeispiel gemäß Fig. 4 realisiert: In diesem Fall ist die Referenzspannungsquelle 5 ein Digital-Analog-Wandler, an dessen digitale Dateneingänge mittels des Zählers 3 ein Datenwort gelegt wird, das am Analogausgang eine der benötigten Referenzspannung $u_{Ref}$ entsprechende Spannung zur Verfügung stellt. Diese Spannung $u_{Ref}$ liegt wie beim Ausführungsbeispiel gemäß Fig. 3 am nicht invertierenden Eingang des Komparators 9 und wird mit der am invertierenden Eingang dieses Komparators anliegenden Spannung verglichen. Über- oder unterschreitet hierbei die Wechselspannung u die Referenzspannung $u_{Ref}$, dann tritt am Ausgang des Komparators ein Signalzustandswechsel ein, der sich nach der Normierung in der Pulsformerstufe 11 als Triggerimpuls für das Auslösen des Meßvorgangs verwenden läßt.

Derselbe Triggerimpuls schaltet außerdem die Referenzspannung $u_{Ref}$. Eine neue Referenzspannung erhält man, indem ein neues Datenwort mittels des Zählerbausteins 3 an den Dateneingang E1 des Digital-Analog-Wandlers 5 gelegt wird. Diese Prozedur läuft so lange ab, bis sämtliche Referenzspannungswerte $u_{Ref}$ am Komparator 9 angelegen und einen Triggerimpuls ausgelöst haben. Diese Triggerimpulse ermöglichen in ihrer zeitlichen Folge ein Anmessen der Meßfläche in äquidistanten Abständen $\Delta y$.

Die Anzahl der Referenzspannungsschritte wird dabei durch folgende Schaltungsbausteine ermittelt: Der Spitzenwertdetektor 2 mißt die Spitzenwechselspannung $U_{max}$ (Fig. 2) am Ausgang des Wegaufnehmers 1. Je nach dem, bei welcher Flanke des Wegaufnehmersignals u in gleichen Abständen gemessen werden soll, wird zuerst der positive oder der negative Wert von $U_{max}$ durch die variable Referenzspannungsquelle 12 an den nicht invertierenden Eingang eines zweiten Komparators 10 gelegt. In der Austastzeit, in der keine Messungen durchgeführt werden, wird die Wertigkeit des Datenwortes am Eingang des Digital-Analog-Wandlers 5 durch den Zähler 3 und die Steuerschaltung 6 solange erhöht bzw. verringert, bis am Ausgang des Wandlers der Referenzwert $u_{Ref}$ des Spitzenspannungswert $U_{max}$ über- bzw. unterschreitet. Die Meldung erfolgt durch den Komparator 10.

Beginnt z.B. die Triggerimpulsfolge mit der aus Fig. 2 ersichtlichen abfallenden Flanke der Wechselspannung u des Wegaufnehmers 1, so wird in der Austastzeit beim Überschreiten der Spitzenwechselspannung $U_{max}$ durch die Referenzspannung $u_{Ref}$ das Datenwort am Eingang des Digital-Analog-Wandlers 5 auf das nächstniedrigwertige Datenwort zurückgesetzt. Dies ist bei Beginn der Meßphase der erste Referenzspannungswert $u_{Ref}$. Die Wertigkeit des Datenwortes wird dann in Schritten solange verringert, bis die vom Digital-Analog-Wandler 5 abgegebene Referenzspannung $u_{Ref}$ den beim Nulldurchgang der Wechselspannung u auf den negativen Wert der Spitzenwechselspannung $U_{max}$ umgeschalteten Spannungswert der Referenzspannungsquelle 12 überschreitet. Der Signalwechsel am Ausgang des Komparators 10 beendet jetzt die Triggerimpulsfolge.

Der schon erwähnte Faktor $E_k$ für die Entfernungskorrektur des Referenzspannungswertes $u_{Ref}$ gemäß Gleichung VII wird in der Baueinheit 4 erzeugt. Sie wird durch den zweiten Eingang E2 des Digital-Analog-Wandlers 5 möglich, der intern die beiden Eingabewerte miteinander multipliziert und den um Faktor $E_k$ erweiterten Referenzspannungswert $u_{Ref}$ ausgangseitig zur Verfügung stellt.

Die Differenzierschaltung 7 und der mit ihr in Reihe liegende Nullspannungsschalter 8 dienen der Ermittlung der zeitlichen Lage der beiden Umkehrpunkte, die in der Steuerschaltung 6 der Koordinierung des Programmablaufes dienen.

Patentansprüche

1. Verfahren zum entfernungs- und winkelunabhängigen Messen gleicher Abstandspunkte von einem gemeinsamen Bezugspunkt aus, an dem ein die Meßfläche abtastendes Schwingsystem vorgesehen ist, d a - d u r c h   g e k e n n z e i c h n e t , daß

a) die Abtastfunktion des Schwingsystems in eine proportionale Wechselspannung u umgewandelt wird,

b) eine in einzelne Schritte unterteilte Referenzspannung $u_{Ref}$ verwendet wird,

c) die proportionale Wechselspannung u und die jeweiligen Anfangspunkte der Referenzspannung $u_{Ref}$ zwischen Amplitudenmaximum und -minimum eines Schwingungszuges miteinander verglichen werden und

d) ein Über- oder Unterschreiten der miteinander verglichenen Spannungen in entsprechend zeitlich voneinander beabstandete Triggersignale umgewandelt wird.

2. Verfahren nach Anspruch 1, d a d u r c h   g e k e n n z e i c h - n e t , daß

a) eine Abtastfunktion mit beliebigem, jedoch während der Meßphase gleichförmigen Kurvenverlauf verwendet wird und

b) das Triggersignal für das Auslösen des Meßvorgangs und für das schrittweise Weiterschalten der Referenzspannung $u_{Ref}$ verwendet wird.

3. Verfahren nach einem der vorausgehenden Ansprüche, das g e - k e n n z e i c h n e t   ist durch die Verwendung in einem Flugkörper oder in einem statischen System, z.B. einem Mikroskop, als Meßplatz gegenüber einem anderen bewegten Objekt oder einer statischen Meßfläche, z.B. dem Erdboden.

4. Verfahren nach einem der vorausgehenden Ansprüche, d a d u r c h
g e k e n n z e i c h n e t , daß die Entfernung zur Meßfläche
automatisch, z.B. mit Hilfe eines nach dem Impulsrücklaufprinzip
arbeitenden Laserentfernungsmessers, oder manuell, z.B. mit anderen Entfernungsmeßeinrichtungen, ermittelt wird.

5. Schaltungsanordnung zur Durchführung des Verfahrens nach einem
der vorausgehenden Ansprüche, d a d u r c h  g e k e n n -
z e i c h n e t , daß die Funktion des Schwingsystems von einem
Wegaufnehmer (1) übernommen und in Form der proportionalen Wechselspannung u dem invertierenden Eingang eines ersten Komparators (9) zugeführt wird, auf dessen nichtinvertierenden Eingang
die Referenzspannung $u_{Ref}$ einer umschaltbaren Referenzspannungsquelle (5) gelangt, daß nach einem Vergleich der beiden Spannungen
bei annähernder Spannungsgleichheit das Ausgangssignal des Komparators einer einen Triggerimpuls erzeugenden Pulsformerstufe (11)
zugeführt wird, und daß eine diese Vorgänge steuernde Schaltung (6)
vorgesehen ist.

6. Schaltungsanordnung nach Anspruch 5, d a d u r c h  g e k e n n -
z e i c h n e t , daß als umschaltbare Referenzquelle (5) ein Digital-Analog-Wandler vorgesehen ist, dem ein mit seinem Eingang an
die Steuerschaltung (6) rückgekoppelter Zähler (3) digitale Werte
zuführt, denen analogausgangseitig die erforderliche Referenzspannung $u_{Ref}$ entspricht.

7. Schaltungsanordnung nach einem der vorausgehenden Ansprüche, d a -
d u r c h  g e k e n n z e i c h n e t , daß ein zweiter Komparator (10) vorgesehen ist, an dessen invertierendem Eingang die
Referenzspannung $u_{Ref}$ und an dessen nichtinvertierendem Eingang
eine von dem Vorzeichen und dem Betrag der Spitzenwechselspannung
$U_{max}$ des Wegaufnehmers ω abhängige variable Referenzspannungsquelle (12)liegt, und daß sein Ausgang sowie der Ausgang des Pulsformers (11) jeweils direkt und der Ausgang des Wegaufnehmers (1)
einmal über einen mit einer Differenzierschaltung (7) in Serie
geschalteten Nullspannungsschalter (8) und zum anderen über einen
Spitzenwertdetektor (2) mit der Steuerschaltung (6) verbunden sind.

8. Schaltungsanordnung nach einem der vorausgehenden Ansprüche, d a d u r c h   g e k e n n z e i c h n e t , daß verschiedene Ausgänge der Steuerschaltung jeweils zu dem Spitzenwertdetektor (2), dem Zähler (3), dem Digital-Analog-Wandler (5), der Referenzspannungsquelle (12) und einer der Erzeugung eines entfernungsabhängigen Multiplikationsfaktors für den Wandler (5) dienenden Einheit (4) führen.

9. Verfahren zum Betreiben der Schaltungsanordnung nach einem der vorausgehenden Ansprüche, d a d u r c h   g e k e n n z e i c h - n e t , daß der Detektor (2) am Ausgang des Wegaufnehmers (1) die Spitzenwechselspannung $U_{max}$ mißt und - abhängig bei welcher Flanke des Wegaufnehmersignals u gemessen werden soll - zuerst den positiven oder negativen Wert von $U_{max}$ an den nichtinvertierenden Eingang des zweiten Komparators (10) legt.

10. Verfahren nach Anspruch 9, d a d u r c h   g e k e n n z e i c h - n e t , daß in der Austastzeit, in der keine Messungen durchgeführt werden, die Wertigkeit des am Eingang E1 des Digital-Analog-Wandlers (5) anliegenden Datenwortes mit dem Zähler (3) und der Steuerschaltung (6) solange erhöht oder verringert wird, bis am Wandlerausgang die Referenzspannung $u_{Ref}$ den Spitzenspannungswert $U_{max}$ über- bzw. unterschreitet und davon abhängig das Datenwort am Eingang E1 auf das nächsthöherwertige Datenwort vorgestellt bzw. das nächstniedrigwertige zurückgesetzt wird.

11. Verfahren nach Anspruch 10, d a d u r c h   g e k e n n z e i c h - n e t , daß die Wertigkeit des Datenwortes solange in Schritten erhöht (oder verringert) wird, bis die vom Analog-Digital-Wandler (5) abgegebene Referenzspannung $u_{Ref}$ den beim Nulldurchgang der Wechselspannung u auf den positiven (bzw. negativen Wert) der Spitzenwechselspannung $U_{max}$ umgeschalteten Spannungswert der Referenzspannungsquelle (12) überschreitet und der Signalwechsel am Ausgang des zweiten Komparators (10) die Triggerimpulsfolge beendet.

Fig.1

$\Delta u_{Ref} = konstant$

$u_{Ref}+4$

$u_{Ref}+3$

$u_{Ref}+2$

$u_{Ref}+1$

$U_{max}$

$u = U_{max} \cdot \sin \omega t$

$u_{Ref}-1$

$u_{Ref}-2$

$u_{Ref}-3$

$u_{Ref}-4$

Fig.2

**1** Wegaufnehmer

**9** K

**11** Pulsformer → Trigger

**5** Umschaltbare Ref.-Quelle

**6** Steuer-Schaltung

Fig.3

0165385

Fig.4